# EUROPEAN PATENT APPLICATION

(11) **EP 4 381 939 A1**
(43) Date of publication of application: **12.06.2024**
(21) Application number: 22212074.3
(22) Date of filing: 07.12.2022
(51) Int. Cl.: A01G 9/12

(54) **FIXING CLIP STRUCTURE FOR FLOWER PLANT**

(71) Applicant: Chu Hsing Metal Co., Ltd., Fuxing Township Chang hua (TW)
(72) Inventor: Wang, Kuan-Chuan, Changhua County (TW)
(74) Representative: Lang, Christian

(57) **Abstract**

A fixing clip structure for a flower plant contains: a first clip (10), a second clip (20), and a flexible element (30). The first clip includes a first press portion (11), a first curved claw (12), and a first clamp sheet. The second clip includes a second press portion (21), a second curved claw (22), and a second clamp sheet. The flexible element is a V-shaped flexible sheet one-piece formed with and between the first curved claw of the first press portion of the first clip and the second curved claw of the second press portion of the second clip. The V-shaped flexible sheet includes a first wing (31), a second wing (32), and an arcuate cavity (33). The V-shaped flexible sheet is configured to expand and retract the first press portion and the second press portion, thus clamping and unclamping the first curved claw and the second curved claw.

## Description

### FIELD OF THE INVENTION

The present invention relates to a fixing clip structure for a flower plant which contains the V-shaped flexible sheet, the first clip, and the second clip made of plastic materials to replace the conventional resilient element, thus avoiding rust and corrosion, simplifying a structure, decreasing a fabrication cost and achieving environmental protection.

### BACKGROUND OF THE INVENTION

A conventional flower plant, such as an orchid, is plated by using a positioning post to support a flower branch and a flower stalk. The positioning post is flexible to contact with a fixing clip, thus supporting the flower branch and the flower stalk securely.

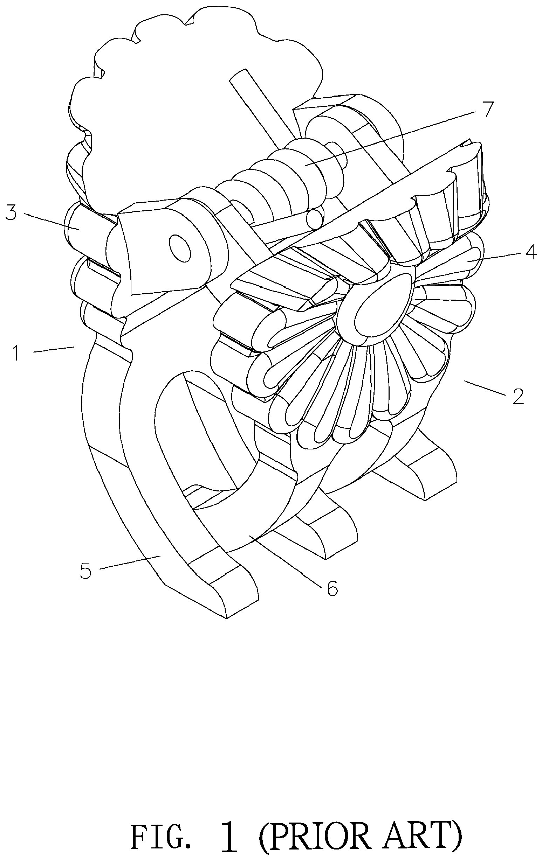

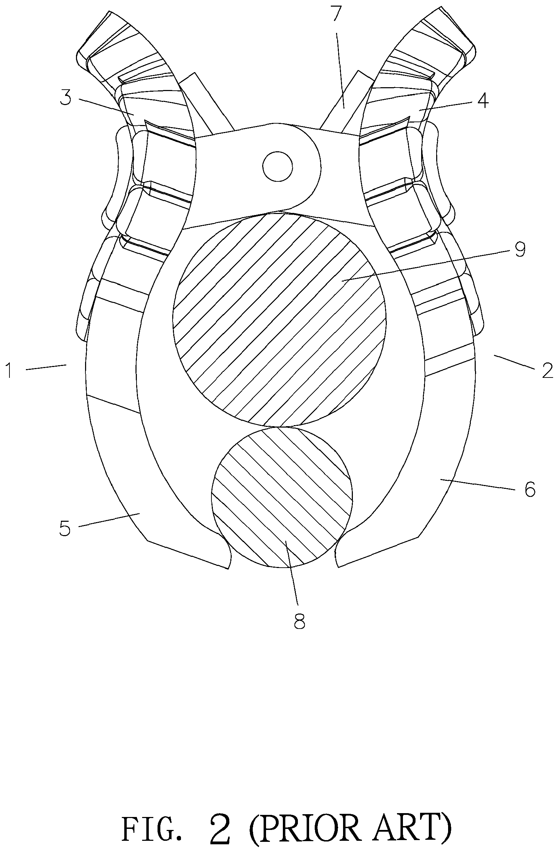

With reference to FIGS. 1 and 2, a fixing clip structure contains a first clip 1 and a second clip 2. The first clip 1 has a first press portion 3 and a first curved claw 5, and the second clip 2 has a second press portion 4 and a second curved claw 6 intersected with the first curved claw 5, wherein a metal resilient element 7 is rotatably connected with the first press portion 3 of the first clip 1 and the second press portion 4 of the second clip 2. Thereby, the metal resilient element 7 between the first clip 1 and the second clip 2 is configured to retract the first curved claw 5 and the second curved claw 6 and to expand the first press portion 3 and the second press portion 4. Also, the metal resilient element 7 is configured to actuate the first press portion 3 and the second press portion 4 to move back to original positions. For example, the metal resilient element 7 is configured to actuate the first press portion 3 and the second press portion 4 to expand the first curved claw 5 and the second curved claw 6, thereby clamping the positioning post 8 and a flower stalk 9 of the flower plant.

However, the metal resilient element will cause an elasticity fatigue, rust and corrosion after watering the flower plant for a period of time. In addition, the metal resilient element and the other components made of plastic materials are removed for time-consuming recycling. The metal resilient element is connected with the first clip and the second clip which are injection molded, thus having a complicated connection and a high fabrication cost.

The present invention has arisen to mitigate and/or obviate the afore-described disadvantages.

### SUMMARY OF THE INVENTION

The primary aspect of the present invention is to provide a fixing clip structure for a flower plant which contains the V-shaped flexible sheet, the first clip, and the second clip made of plastic materials to replace the conventional resilient element, thus avoiding a rust and a corrosion, simplifying a structure, decreasing a fabrication cost and achieving an environmental protection.

To obtain above-mentioned aspect, a fixing clip structure for a flower plant provided by the present invention contains: a first clip, a second clip, and a flexible element defined between the first clip and the second clip.

The first clip includes a first press portion, a first curved claw extending from the first press portion, and a first clamp sheet formed on the first curved claw.

The second clip includes a second press portion, a second curved claw extending from the second press portion, and a second clamp sheet formed on the second curved claw and intersected with the first curved claw, such that the flexible element between the first clip and the second clip is configured to actuate the first curved claw and the second curved claw to clamp, unclamp, and move back to an original position.

The flexible element is a V-shaped flexible sheet one-piece formed with and between the first curved claw of the first press portion of the first clip and the second curved claw of the second press portion of the second clip. The V-shaped flexible sheet includes an arcuate cavity defined between the first wing and the second wing. The V-shaped flexible sheet is defined between the first press portion and the second press portion and is configured to expand and retract the first press portion and the second press portion, thus clamping and unclamping the first curved claw and the second curved claw.

The V-shaped flexible sheet includes a first wing and a second wing which extend outward form the V-shaped flexible sheet in a curvature.

### BRIEF DESCRIPTION OF THE DRAWINGS

FIG. 1 is a perspective view of a conventional fixing clip structure of a flower plant.
FIG. 2 is a cross sectional view showing the assembly of the conventional fixing clip structure of the flower plant.
FIG. 3 is a perspective view showing the assembly of a fixing clip structure for a flower plant according to a preferred embodiment of the present invention.
FIG. 4 is a cross sectional view showing the assembly of the fixing clip structure of the flower plant according to the preferred embodiment of the present invention.
FIG. 5 is a schematic view showing the operation of the fixing clip structure of the flower plant according to the preferred embodiment of the present invention.
FIG. 6 is a perspective view showing the application of the fixing clip structure of the flower plant according to the preferred embodiment of the present invention.

### DETAILED DESCRIPTION OF THE PREFERRED EMBODIMENTS

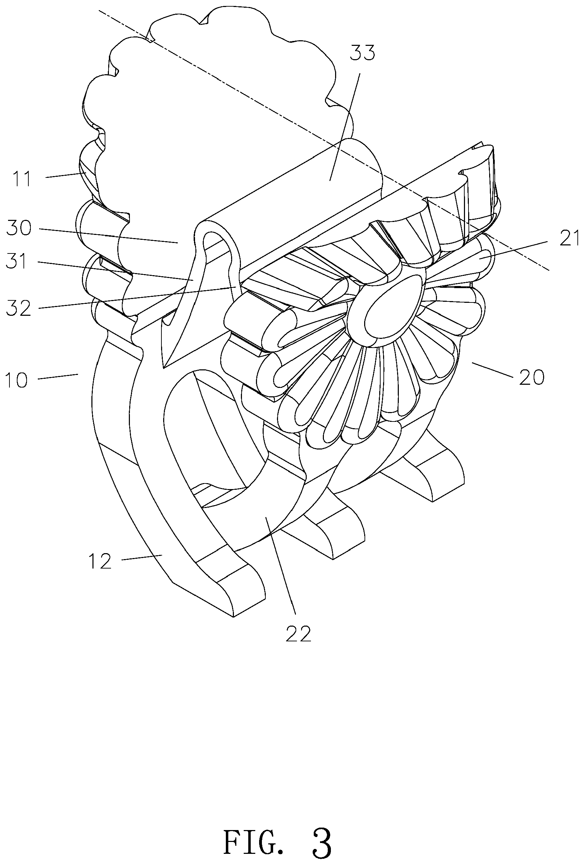

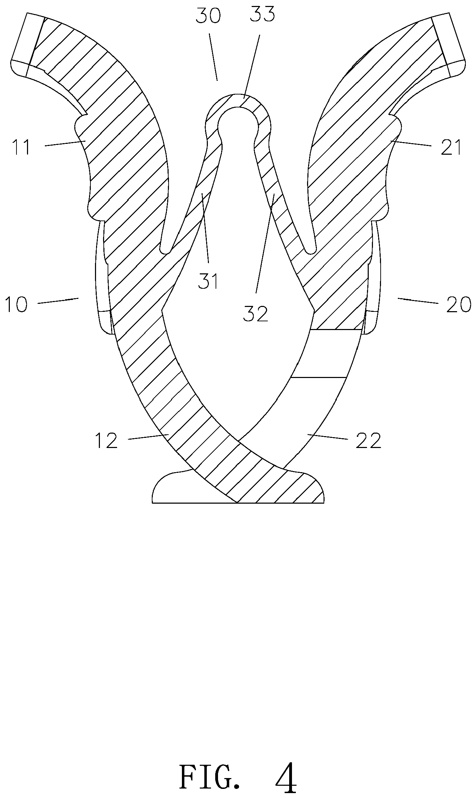

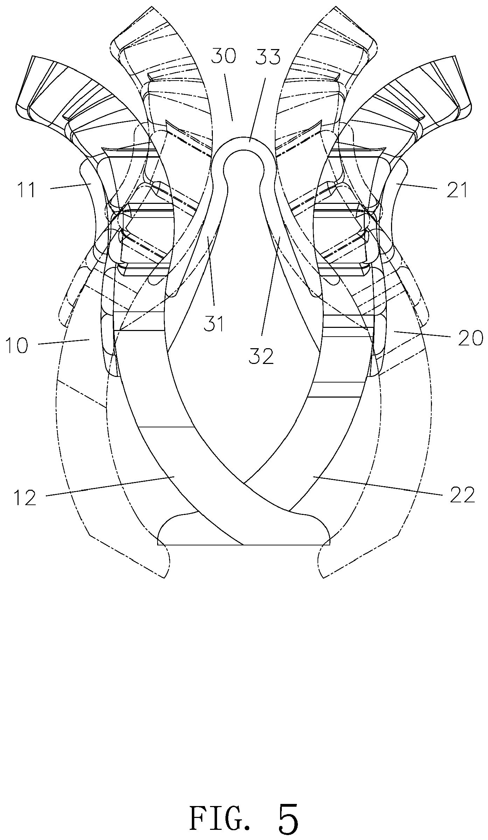

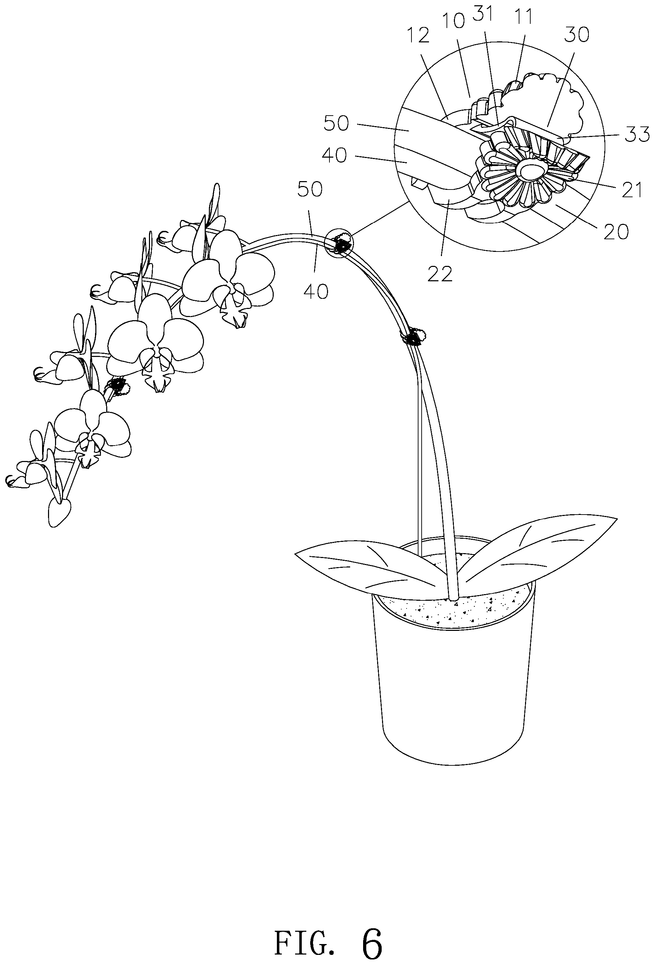

With reference to FIGS. 3-6, a fixing clip structure for a flower plant according to a preferred embodiment of the present invention comprises: a first clip 10, a second clip 20, and a flexible element defined between the first clip 10 and the second clip 20. The first clip 10 includes a first press portion 11, a first curved claw 12 extending from the first press portion 11, a first clamp sheet 13 formed on the first curved claw 12, and the second clip 20 includes a second press portion 21, a second curved claw 22 extending from the second press portion 21, a second clamp sheet 23 formed on the second curved claw 22 and intersected with the first curved claw 12, such that the flexible element between the first clip 10 and the second clip 20 is configured to actuate the first curved claw 12 and the second curved claw 22 to clamp, unclamp, and move back to an original position.

The flexible element is a V-shaped flexible sheet 30 one-piece formed with and between the first curved claw 12 of the first press portion 11 of the first clip 10 and the second curved claw 22 of the second press portion 21 of the second clip 20, wherein the V-shaped flexible sheet 30 includes a first wing 31 and a second wing 32 which extend outward form the V-shaped flexible sheet 30 in a curvature, and an arcuate cavity 33 defined between the first wing 31 and the second wing 32, such that the V-shaped flexible sheet 30 has flexibility and structural strength, wherein the V-shaped flexible sheet 30 is defined between the first press portion 11 and the second press portion 21 and is configured to expand and retract the first press portion 11 and the second press portion 21, thus clamping and unclamping the first curved claw 12 and the second curved claw 22. Thereby, the fixing clip structure of the present invention is applied to clamp a positioning post 40 and a flower branch and a flower stalk 50 easily and securely.

Accordingly, the fixing clip structure of the present invention comprises the first clip, the second clip, and the V-shaped flexible sheet one-piece formed with the first clip and the second clip, thus obtaining an easy structure and a low fabrication cost. The V-shaped flexible sheet, the first clip, and the second clip are made of plastic materials to avoid rust and corrosion like the conventional metal resilient element and to prolong a service life. Preferably, the first clip, the second clip, and the V-shaped flexible sheet are one-piece formed to avoid a removal of related components, thus achieving environmental protection.

The fixing clip structure of the present invention contains the V-shaped flexible sheet between the first clip and the second clip to replace the conventional metal resilient element, thus simplifying structure and reducing fabrication cost.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A fixing clip structure for a flower plant comprises:
a first clip, a second clip, and a flexible element defined between the first clip and the second clip,
the first clip including a first press portion, a first curved claw extending from the first press portion, and a first clamp sheet formed on the first curved claw,
the second clip including a second press portion, a second curved claw extending from the second press portion, and a second clamp sheet formed on the second curved claw and intersected with the first curved claw, such that the flexible element between the first clip and the second clip is configured to actuate the first curved claw and the second curved claw to clamp, unclamp, and move back to an original position,
wherein the flexible element is a V-shaped flexible sheet one-piece formed with and between the first curved claw of the first press portion of the first clip and the second curved claw of the second press portion of the second clip, wherein the V-shaped flexible sheet includes an arcuate cavity defined between the first wing and the second wing, wherein the V-shaped flexible sheet is defined between the first press portion and the second press portion and is configured to expand and retract the first press portion and the second press portion, thus clamping and unclamping the first curved claw and the second curved claw.

2. The fixing clip structure as claimed in claim 1, wherein the V-shaped flexible sheet includes a first wing and a second wing which extend outward form the V-shaped flexible sheet in a curvature.
